# EUROPEAN PATENT SPECIFICATION

(11) **EP 0 307 957 B1**
(45) Date of publication and mention of the grant of the patent: **06.07.1994**
(21) Application number: 88115315.9
(22) Date of filing: 19.09.1988
(51) Int. Cl.: G06F 9/38, G06F 9/32

(54) **Central processing unit having instruction prefetch function**
Zentrale Verarbeitungseinheit mit einer Befehlsvorabruffunktion
Unité centrale de traitement avec une fonction de préextraction des instructions

(30) Priority: 17.09.1987 JP 234303/87
(43) Date of publication of application: 22.03.1989
(73) Proprietor: NEC CORPORATION, Tokyo (JP)
(72) Inventor: Kusuda, Masahiro, Minato-ku Tokyo (JP)
(74) Representative: Glawe, Delfs, Moll & Partner

(56) References cited:
- EP-A- 0 211 487
- US-A- 3 577 190

## Description

### BACKGROUND OF THE INVENTION

The present invention relates to a central processing unit (or a microprocessor) having an instruction prefetch function and, more particularly, to an improvement in a control circuit for determining execution or non-execution of a conditional instruction.

A central processing unit of a sequential control type employs an instruction prefetch unit for prefetching one or more instructions from a memory during an unused period of an address/data bus. An execution unit receives and executes an instruction from the instruction prefetch unit. Accordingly, a bus cycle for fetching the instruction is not required to be allocated individually, resulting in enhancing a processing speed.

In a string of instructions for a program to be executed, the conditional instructions having a conditional branch instruction are frequently used. The conditional instruction may be employed to control the flow of data processing in accordance with whether or not the status information of the execution unit satisfies the condition designated by the conditional instruction.

The conditional instruction is not executed so long as the status information does not satisfy the condition in the conditional instruction. However, even if the conditional instruction involves a condition which is not coincident with the status information, the execution unit receives the conditional instruction from the prefetch unit to judge whether or not the status information satisfies the condition designated by the conditional instruction. This means that the execution unit performs the futile processing to lower the processing efficiency and speed.

### SUMMARY OF THE INVENTION

Therefore, an object of the present invention is to provide a central processing unit having an improved control circuit for determining an execution of a conditional instruction.

Another object of the present invention is to provide a central processing unit having means for judging whether or not the status information satisfies the condition designated in the conditional instruction before an execution unit receives that conditional instruction.

Still another object of the present invention is to provide a microprocessor having means for preventing a conditional instruction from being received by an execution unit when the conditional instruction accompanies a condition which is not coincident with status information.

A central processing unit according to the present invention is set out in claim 1.

The conditional instruction is not always arranged just after a first-type instruction that may change the status information stored in the status register, a dyadic operation instruction for example. One or more second-type instructions that never change the status information, a data transfer instruction, for example, frequently intervene between the first-type instruction and the conditional instruction, and moreover it is possible to program in such a manner. In this case, the execution unit executes the second-type instruction after the execution of first-type instruction. During the executing period of the second-type instruction, the judging means judges whether or not the status information satisfies the execution condition of the conditional instruction. When the judged result represents unsatisfaction, the control signal is generated, so that the instruction queue outputs the subsequent instruction in place of the conditional instruction while the executing unit is executing the second-type instruction. Thus, the conditional instruction is deleted without being taken into the execution unit to enhance the processing efficiency and speed. On the other hand, when the execution condition is satisfied, the conditional instruction is applied to the execution unit and then executed.

### BRIEF DESCRIPTION OF THE DRAWINGS

The above and other objects, advantages and features of the present invention will be more apparent from the following description taken in conjunction with the accompanying drawings, in which
Fig. 1 is a block diagram representative of an embodiment of the present invention;
Fig. 2 is an instruction arrangement diagram representative of a part of a program used for describing an operation of the embodiment shown in Fig. 1;
Fig. 3 is a timing chart representative of the operation; and
Fig. 4 is a block diagram representative of another embodiment of the present invention.

### DETAILED DESCRIPTION OF THE EMBODIMENTS

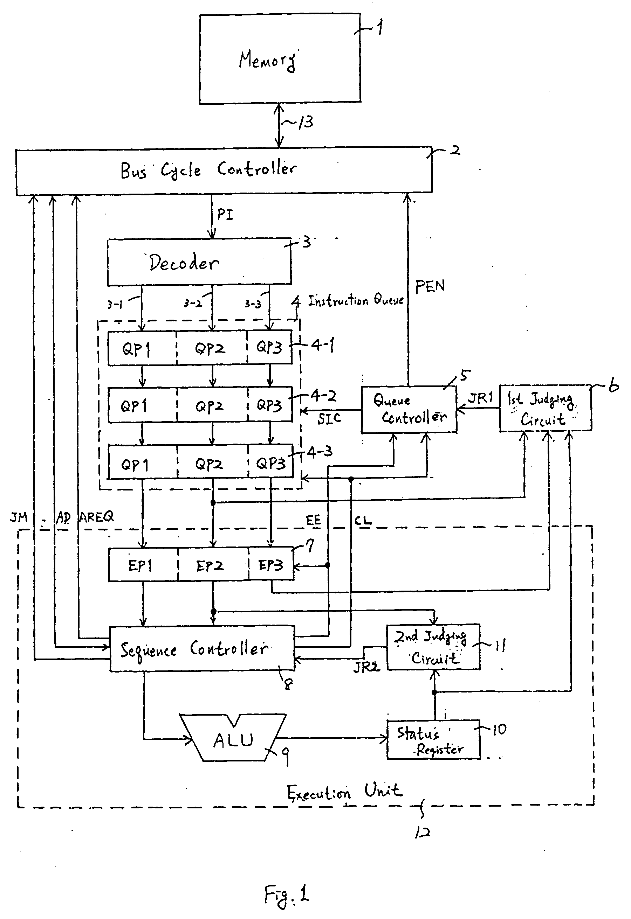

Referring to Fig. 1, a central processing unit (CPU) or a microprocessor according to an embodiment of the present invention includes a bus cycle controller 2 which makes access to a memory 1 via an address/data bus 13 to read or write data therefrom or thereinto in response to an access request signal AREQ and address/data information AD from an execution unit 12. The memory 1 also stores a string of instructions for a program. When the bus 13 is not used and when a prefetch-enable signal PEN is produced from a queue controller 5, the bus controller 5 also makes access to the memory 1 to prefetch one or more instructions therefrom. The prefetched instruction PI is supplied to an instruction decoder 3 which, in turn, produces a decoded instruction code consisting of three kinds of codes 3-1, 3-2 and 3-3 in response thereto. The first code 3-1 is a logic control code employed to designate an operation of an arithmetic and logic unit (ALU). The second code 3-2 is a sequence control code including or representing an execution condition. This code also includes a branch address when a branch instruction is decoded. The third code 3-3 is a status update tag code which is provided in accordance with one feature of the present invention and represents whether or not the instruction may change the status information stored in a status register 10. The decoded instruction code from the decoder 3 is supplied to an instruction queue 4 including three queue registers 4-1, 4-2 and 4-3. Each of the registers 4-1, 4-2 and 4-3 includes a first area QP1 storing the logic control code, a second area QP storing a sequence control code and a third area QP3 storing a status update tag code. The instructions queue 4 can store up to three instructions. When the queue 4 is full, the queue controller 5 changes the prefetch-enable signal PEN to an inactive level to inform to the bus controller 2 that the instruction prefetch is not allowed. The decoded instruction code stored in the third queue register 4-3 is outputted from the instruction queue 4 and supplied to the execution unit 12. The sequence control code stored in the second area QP2 of the third queue register 4-3 is supplied to a first set of input terminals of a first judging circuit 6.

The execution unit 12 includes an execution instruction register 7 which receives and temporarily stores the instruction code outputted from the instruction queue 4 in response to an execution end signal EE which will be described later. This register 7 also has three areas EP1, EP2 and EP3 for storing the logic control code, sequence control code and status update tag code, respectively. The status update tag code stored in the third area EP3 is supplied to a control terminal of the first judging circuit 6 to control the operation thereof. Namely, when the register 7 receives such an instruction that may change the content of the status register 10, the judging circuit 6 is deactivated to stop the judging operation. On the other hand, when the instruction which never change the content of the status register 10 is applied to the register 7, the judging circuit 6 becomes activate to perform its operation. The codes stored in the areas EP1 and EP2 of the register 7 are supplied to a sequence controller 8 which, in turn, responds thereto to designate the operation of the ALU 9 and to transfer the access request signal AREQ and the address/data information AD to the bus controller 2, if desired. The ALU 9 performs the operation designated by the controller 8 on one or more operands applied thereto. The status information (including a carry, sign, zero, etc.) produced in accordance with the operation state of the ALU 9 is supplied to the status register 10 and stored thereinto. In order to determine execution or non-execution of the conditional instruction, the execution unit 12 further includes a second judging circuit 11 as well known in the art. The circuit 11 responds the status information of the status register 10 and the sequence control code from the area EP2 to produce and supply to the controller 8 a judged result signal JR2 representing whether or not the conditional instruction is to be executed. When the execution of the current instruction is completed, the sequence controller 8 produces an execution end signal EE. In response to this signal EE, the execution instruction register 7 receives the instruction outputted from the instruction queue 4, and the queue controller 5 produces a shift-in signal SIC to shift downward the instructions in the queue 4 by one.

The status information of the status register 10 is also supplied to a second set of input terminals of the first judging circuit 6. Accordingly, the first judging circuit 6 judges, when activated, whether or not the instruction stored in the third queue register 4-3 is to be executed in response to the sequence control register of queue register 4-3 and the status information. This judged result signal JR1 is supplied to the queue controller 5. When the signal JR1 takes an active level, i.e. when the instruction stored in the third queue register 4-3 is judged to be not executed, the queue controller 5 produces the shift-in signal SIC. As a result, the third queue register 4-3 takes in the instruction stored in the second queue register 4-2. The instruction which has been stored in the third queue register 4-3 is now deleted and disappears. Thus, while the execution unit 12 is executing the instruction which never change the status information, the instruction stored in the third queue register 4-3 and outputted from the instruction queue 4 as an instruction to be executed next is judged to be executed or not executed, and is deleted without being taken into the execution unit 12 if it is not to be executed.

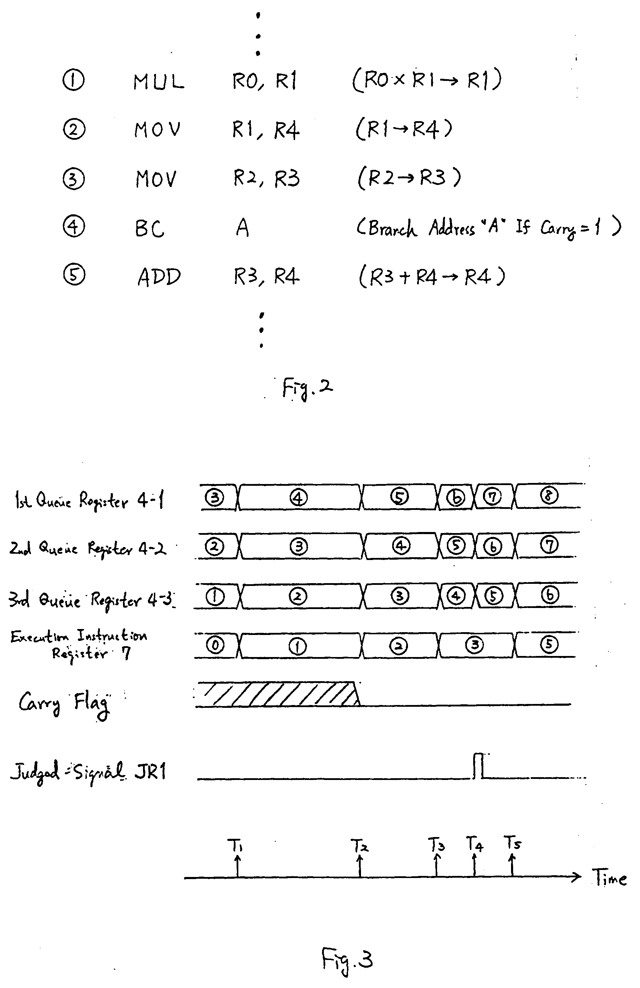

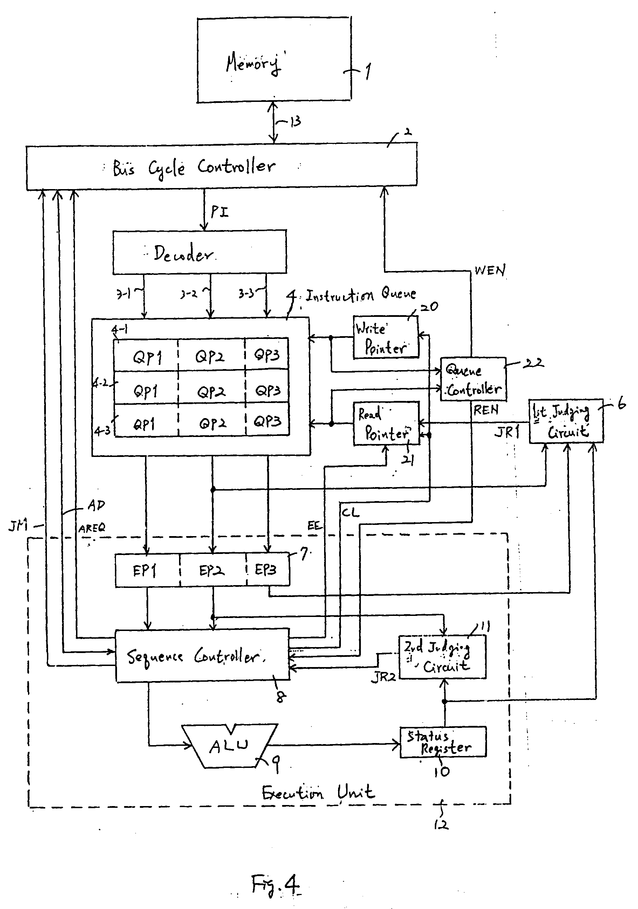

A further detailed circuit operation will be explained with reference to Figs. 2 and 3. In the program example shown in Fig. 2, an instruction ① is a multiplication instruction of the contents of two general registers R₀ and R₁ within a plurality of general registers (not shown in the drawings). Therefore, a carry flag in the status register 10 may take "1" in accordance with the multiplication result. Instructions ② and ③ which will be executed after the instruction ① are data transfer instructions between general registers R₁ and R₄ and those R₂ and R₃, respectively, and therefore these instructions do not change the status information of the status register 10. An instruction ④ is a conditional branch instruction for branching to the address "A" if the carry flag in the status register 10 is "1". An instruction ⑤ is an additional instruction of the contents of general registers R₃ and R₄.

Assume now that the execution unit 12 is executing an instruction ⓪ before the instruction ① and that the third, second and first queue registers 4-1, 4-2 and 4-3 stores the instructions ③, ② and ①, respectively, as shown in Fig. 3. When the execution unit 12 completes the execution of the instruction ⓪ at a time point T₁, the execution instruction register 7 takes in the instruction ① in response to the signal EE. The queue controller 5 produces the shift-in signal SIC, so that the queue registers 4-3, 4-2 and 4-1 receive the instructions ②, ③ and ④, respectively. Since the instruction ① is a multiplication instruction which may change the status information of the status register 10, the first judging circuit 6 is deactivated by the tag code from the area EP3 of the register 7. Assuming that the multiplication result does not provide a carry signal, the carry flag in the status register 10 takes "0". When the execution of the instruction ① is completed at a time point T₂, the execution unit 12 takes in the instruction ② and the queue registers 4-3, 4-2 and 4-1 take in the instructions ③, ④ and ⑤, respectively. Since the instruction ② does not change the content of the status register 10, the judging circuit 6 is activated to judge whether or not the instruction ③ stored in the third queue register 4-3 is to be executed. At this time, the instruction ③ is a data transfer instruction which is to be executed unconditionally, and therefore the sequence control code thereof takes such a value that the judged result signal JR1 takes the inactive value irrespective of the status information, as shown in Fig. 3. Therefore, the queue controller 5 does not generate the shift-in signal SIC.

When the execution of the instruction ② is completed at a time point T₃, the execution unit 12 receives the instruction ③ and the queue registers 4-3, 4-2 and 4-1 receive the instructions ④, ⑤ and ⑥, respectively. Thus, the instruction queue 4 outputts the conditional branch instruction ④ as an instruction to be executed in the next step. Since the data transfer instruction ③ is received by the unit 12, the judging circuit 6 is activated to judge whether or not the status information of the status register 10 satisfies the condition of the branch instruction ④. That is, the circuit 6 detects whether or not the carry flag of the status information is "1". The value of the carry flag is "0". Accordingly, the judging circuit 6 changes the signal JR1 to the active level (high level) at a time point T₄ during the executing period of the instruction ③, as shown in Fig. 3. In response to the active level of the signal JR1, the queue controller 5 produces the shift-in signal SIC. As a result, the third queue register 4-3 receives the instruction ⑤ to delete the conditional branch instruction ④, as shown in Fig. 3. Thus, the instruction queue 4 outputs the instruction ⑤ in place of the conditional branch instruction ④ during the executing period of the instruction ③. When the execution of the instruction ③ is completed at a time point T₅, the execution unit 12 receives the instruction outputted from the instruction queue 4, this instruction being the addition instruction ⑤, not the conditional branch instruction ④. Therefore, the unit 12 performs an addition operation.

On the other hand, in a case where the carry flag is set to "1" by the execution of the instruction ①, the judging result signal JR1 holds "0", so that the conditional branch instruction ④ is received by the executed unit 12 to be executed. As a result, the sequence controller 8 produces a clear signal CL to clear the contents of the queue registers 4-1 to 4-3 and initialize the queue controller 5. Further, the controller 8 transfers a branch common signal JM and the address information AD of an address "A" to the bus controller 2. In response thereto, the controller 2 makes access to the address "A" of the memory and supplies an instruction stored therein to the decoder 3. The instruction prefetch operation is also carried out with respect to instructions stored in subsequent addresses to the address "A".

Consider now the case that the conditional branch information ④ is arranged just after the instruction ①. In this case, the judging circuit 6 does not judge whether or not the instruction ④ is to be executed. The instruction ④ is received by the execution unit 12, and the second judging circuit 11 in the unit 12 determines the execution or non-execution of the instruction ④.

Referring to Fig. 4, there is shown another embodiment of the present invention, in which the same constituents as those shown in Fig. 1 are denoted by the like reference numerals to omit further description thereof. In this embodiment, a read pointer 21 is provided to designate one of the queue registers 4-1 to 4-3 and the decoded instruction code of the designated queue register 4-1, 4-2 or 4-3 is read out as an output of the instruction queue. The initial value of the read pointer 21 is "00" (the first queue register 4-1 being thus designated), and the content thereof is changed in a manner of "00" → "01" → "10" → "00" → ..., every time when the execution end signal EE is produced. A write pointer 20 is further provided to designate one of the queue registers 4-1 to 4-3 into which the decoded code of the prefetched instruction is to be written. The outputs of the write and read pointers 20 and 21 are supplied to a queue controller 22. In response thereto, the controller 22 controls a write-enable signal WEN to the bus controller 2 and a read-enable signal REN to the sequence controller 8. Thus, the bus controller 2 can detect whether or not the instruction prefetch is allowed (i.e. whether or not a free queue register is present in the instruction queue 4), and the sequence controller 8 can detect whether or not at least one decoded instruction code is stored in the instruction queue 4).

Assume that the queue registers 4-2 and 4-3 stores respectively the instructions ④ and ⑤ shown in Fig. 2 and the read pointer 21 designates the second queue register 4-2. Therefore, the instruction queue 4 outputs the decoded code of the instruction ④. The execution unit 12 is executing the instruction ③. The judging circuit 6 is thereby activated to detect whether or not the carry flag of the status information is "1". When the value of the carry flag is "0", the active level signal JR1 is produced. In response thereto, the read pointer 21 changes its output from "01" to "10". Accordingly, the third queue register 4-3 is designated, so that the decoded code of the instruction ⑤ is outputted from the queue 4 and supplied to the unit 12. After the completion of the instruction ③, the unit 12 takes in and executes the instruction ⑤. When the bus controller 2 prefetches the instruction ⑥ from the memory 1 during the executing period of the instruction ③ or ⑤, since the write pointer 20 designates the first queue register 4-1, the decoded code of the instruction ⑥ is written into the designated register 4-1. After writing, the output of the write pointer 20 is incremented by one to designate the second queue register 4-2. Since the read pointer 21 designates the third queue register 4-3 in response to the active level signal JR1, the second queue register 4-3 is in a write-enable condition. Therefore, the decoded code of the next instruction ⑦ is written into the second queue register 4-3. Thus, the instruction ④ is deleted from the queue 4.

As described above, the determination of execution or non-execution of the conditional instruction can be executed while the execution unit is executing another instruction and the conditional instruction can be deleted without being taken into the execution unit if it is to be not executed. The processing efficiency and speed are thus enhanced.

## Claims

1. A central processing unit comprising an instruction queue (4) temporarily storing and outputting one or more prefetched instructions, an execution unit (12) receiving and executing the instruction outputted from said instruction queue when an execution of a current instruction has been completed, a status register (10) storing status information of the execution unit, judging means (6) for judging whether or not the status information stored in said status register satisfies an execution condition designated in a second instruction outputted from said instruction queue while said execution unit is executing a first instruction which does not change the status information, and control means (5) responsive to a judged result from said judging means representing that the status information does not satisfy said execution condition designated in said second instruction outputted from said instruction queue for causing said instruction queue to output a following third instruction and to provide the execution unit with said third instruction in place of said second instruction which has been outputted before said judging means outputs said judged result.

2. The central processing unit as claimed in claim 1, wherein said judging means (6) is deactivated when the instruction being currently executed in said execution unit (12) may change the content of the status information stored in said status register (10).

3. The central processing unit as claimed in claim 1, wherein said instruction queue (4) includes a plurality of queue registers (4-1, 4-2, 4-3) each storing a prefetched instruction, and said control means includes first means for producing address data designating one of said queue register to read out the instruction stored therein as the instruction outputted from said instruction queue and second means responsive to said judged result for changing the address data producing by said first means to designate another one of said queue register.

4. The central processing unit as claimed in claim 1, further comprising means (2) for prefetching an instruction from a memory (1) storing a plurality of instructions, decoder means (3) coupled to said prefetching means for decoding the prefetched instruction to produce a decoded instruction code having a tag code (3-3), the instruction queue (4) being coupled to said decoder means for temporarily storing said decoded instruction code, said instruction queue including a plurality of queue registers (4-1, 4-2, 4-3) each storing a decoded instruction code, the execution unit (12) being coupled to said instruction queue for receiving the decoded instruction code and performing a processing operation determined by the received decoded instruction code, said execution unit including the status register (10) storing status information, the judging means (6) judging whether or not the status information stored in said status information is coincident with an execution condition (QP2) of the decode instruction code which will be subsequently received by said execution unit when the decoded instruction code which is currently applied to said execution unit has the tag code (EP3) representing that the status information is not changed and said judging means producing a control signal (JR1) when not coincident, and means (5) responsive to said control signal for deleting from said instruction queue the decoded instruction code which will be subsequently received by said execution unit, whereby another decode instruction code is received by said execution unit and executed.

## Patentansprüche

1. Zentralprozessoreinheit mit einer Befehlsschlange (4), die temporär einen oder mehrere vorabgerufene Befehle speichert und ausgibt, einer Ausführeinheit (12) zum Empfangen und Ausführen des Befehls, der von der Befehlsschlange ausgegeben wurde, wenn die Ausführung eines laufenden Befehls vollendet wurde, einem Statusregister 10, das Statusinformationen der Ausführungseinheit speichert,
einer Beurteilungsvorrichtung (6), zum Beurteilen ob oder nicht die Statusinformation, die im Statusregister gespeichert ist, eine Durchführungsbedingung erfüllt, die in einem zweiten Befehl designiert ist, welcher von der Befehlsschlange ausgegeben wird, während die Ausführeinheit einen ersten Befehl ausführt, der die Statusinformation nicht ändert, und einer Steuereinheit (5), die in Antwort auf das beurteilte Ergebnis von der Beurteilungsvorrichtung darstellt, daß die Statusinformation nicht die Ausführungsbedingung erfüllt, die in der Zweiten Instruktion von der Befehlsschlange designiert ist, um zu veranlassen, daß die Befehlsschlange einen folgenden dritten Befehl ausgibt und die Ausführeinheit mit diesem dritten Befehl versorgt anstelle des zweiten Befehls, der ausgegeben wurde, bevor die Beurteilungsvorrichtung das Beurteilungsergebnis ausgibt.

2. Zentralprozessoreinheit nach Anspruch 1,
dadurch **gekennzeichnet,** daß die Beurteilungsvorrichtung deaktiviert wird, wenn der laufend in der Ausführungseinheit (12) ausgeführte Befehl den Inhalt der Statusinformation, die im Statusregister (10) gespeichert ist, ändern kann.

3. Zentralprozessoreinheit nach Anspruch 1,
worin die Befehlsschlange (4) eine Vielzahl von Warteschlangenregistern (4-1, 4-2, 4-3) enthält, die jeweils einen vorabgerufenen Befehl speichern und wobei die Steuervorrichtung eine erste Vorrichtung enthält zum Erzeugen von Adressdaten, die eines der Warteschlangenregister auszeichnen, um den darin gespeicherten Befehl auszulesen als Befehl, der von der Befehlsschlange ausgegeben wird, und eine zweite Vorrichtung, die in Abhängigkeit vom Beurteilungsergebnis das Adressdatum, welches von der ersten Vorrichtung erzeugt wurde, zu ändern, um ein anderes der Warteschlangenregister auszuzeichnen.

4. Zentralprozessoreinheit nach Anspruch 1,
welche weiter aufweist eine Vorrichtung (2) zum Vorabrufen eines Befehls von einem Speicher (1), der eine Vielzahl von Befehlen speichert, eine Dekodervorrichtung (3), die mit der Vorabrufvorrichtung verbunden ist, um den vorabgerufenen Befehl zu dekodieren, um einen dekodierten Befehlscode zu erzeugen, welcher einen Markierungscode (3-3) aufweist, wobei die Warteschlange (4) mit der Dekodervorrichtung gekoppelt ist für ein temporäres Speichern des dekodierten Befehlscodes, wobei die Befehlsschlange eine Vielzahl von Warteschlangenregistern (4-1, 4-2, 4-3) aufweist, die jeweils dekodierten Befehlscode speichern, wobei die Ausführungseinheit (12) mit der Befehlsschlange gekoppelt ist, um den dekodierten Befehlscode zu empfangen und eine Prozessoroperation durchzuführen, die bestimmt wird durch den empfangenen dekodierten Befehlscode, wobei die Ausführungseinheit das Statusregister (10) enthält, welches Statusinformationen speichert, die Beurteilungsvorrichtung (6) zum Beurteilen ob oder ob nicht die Statusinformation, die in dem Statusregister (10) gespeichert ist, übereinstimmt mit einer Ausführungsbedingung (QP2) des dekodierten Befehlscodes, welcher anschließend durch die Ausführungseinheit empfangen wird, wenn der augenblicklich zur Ausführungseinheit zugeführte dekodierte Befehlscode den Markierungscode (EP3) enthält, der bedeutet, daß die Statusinformation nicht geändert wird, und die Beurteilungsvorrichtung ein Steuersignal (JR1) erzeugt, wenn sie nicht übereinstimmt, und eine Vorrichtung (5), die in Antwort auf das Steuersignal den dekodierten Befehlscode aus der Befehlsschlange löscht, der anschließend von der Ausführeinheit empfangen wird, wodurch ein anderer, dekodierter Befehlscode von der Ausführeinheit empfangen und ausgeführt wird.

## Revendications

1. Unité centrale de traitement comprenant une file d'attente d'instruction (4) mémorisant temporairement et sortant une ou plusieurs instructions préextraites, une unité d'exécution (12) recevant et exécutant l'instruction sortie à partir de ladite file d'attente d'instruction lorsqu'une exécution d'une instruction courante a été achevée, un registre d'état (10) mémorisant des informations d'état de l'unité d'exécution, un moyen de jugement (6) pour juger si oui ou non les informations d'état mémorisées dans ledit registre d'état satisfont une condition d'exécution désignée dans une seconde instruction sortie à partir de ladite file d'attente d'instruction tandis que ladite unité d'exécution exécute une première instruction qui ne modifie pas les informations d'état et un moyen de commande (5) répondant à un résultat jugé dudit moyen de jugement représentant que les informations d'état ne satisfont pas ladite condition d'exécution désignée dans ladite seconde instruction sortie à partir de ladite file d'attente d'instruction pour amener ladite file d'attente d'instruction à sortir une troisième instruction suivante et pour délivrer à l'unité d'exécution ladite troisième instruction à la place de ladite seconde instruction qui a été sortie avant que ledit moyen de jugement sorte ledit résultat jugé.

2. Unité centrale de traitement selon la revendication 1, dans laquelle ledit moyen de jugement (6) est désactivé lorsque l'instruction qui est en train d'être exécutée dans ladite unité d'exécution 12 peut modifier le contenu des informations d'état mémorisées dans ledit registre d'état (10).

3. Unité centrale de traitement selon la revendication 1, dans laquelle ladite file d'attente d'instruction (4) comporte une multitude de registres de file d'attente (4-1, 4-2, 4-3) chacun mémorisant une instruction préextraite et ledit moyen de commande comporte un premier moyen pour produire des données d'adresse désignant un registre desdits registres de file d'attente pour extraire l'instruction mémorisée dans celui-ci comme l'instruction sortie à partir de ladite file d'attente d'instruction et un second moyen répondant audit résultat jugé pour modifier la production des données d'adresse par ledit premier moyen afin de désigner un autre registre parmi les registres de file d'attente.

4. Unité centrale de traitement selon la revendication 1, comprenant de plus un moyen (2) pour préextraire une instruction à partir d'une mémoire (1) mémorisant une multitude d'instructions, un moyen de décodeur (3) couplé audit moyen de préextraction pour décoder l'instruction préextraite afin de produire un code d'instruction décodé ayant un code repère (3-3), la file d'attente d'instruction (4) étant couplée audit moyen de décodeur pour mémoriser temporairement ledit code d'instruction décodé, ladite file d'attente d'instruction comportant une multitude de registres de file d'attente (4-1, 4-2, 4-3) chacun mémorisant un code d'instruction décodé, l'unité d'exécution (12) étant couplée à ladite file d'attente d'instruction pour recevoir le code d'instruction décodé et effectuer une opération de traitement déterminée par le code d'instruction décodé reçu, ladite unité d'exécution comportant le registre d'état (10) mémorisant les informations d'état, le moyen de jugement (6) pour juger si oui ou non les informations d'état mémorisées dans ledit registre d'état coïncident avec une condition d'exécution (QP2) du code d'instruction décodé qui sera ultérieurement reçu par ladite unité d'exécution lorsque le code d'instruction décodé qui est actuellement appliqué à ladite unité d'exécution comporte le code de repère (EP3) représentant que les informations d'état ne sont pas modifiées et ledit moyen de jugement produisant un signal de commande (JR1) lorsqu'elles ne coïncident pas et un moyen (5) répondant audit signal de commande pour annuler dans la file d'attente d'instruction le code d'instruction décodé qui sera ultérieurement reçu par ladite unité d'exécution, d'où il résulte qu'un autre code d'instruction décodé est reçu par ladite unité d'exécution et exécuté.
